# EUROPEAN PATENT APPLICATION

(11) **EP 4 835 564 A1**
(43) Date of publication of application: **04.11.2026**
(21) Application number: 23963279.7
(22) Date of filing: 28.12.2023
(51) Int. Cl.: G03B 21/20

(54) **LIGHT SOURCE ASSEMBLY AND IMAGE PROJECTION DEVICE COMPRISING SAME**

(71) Applicant: LG Electronics Inc., Yeongdeungpo-gu Seoul 07336 (KR)
(72) Inventor: KANG, Shingyu, Seoul 06772 (KR); JEONG, Junho, Seoul 06772 (KR); KIM, Eunjin, Seoul 06772 (KR); BOK, Kiso, Seoul 06772 (KR)
(74) Representative: Schott, Jakob Valentin
(86) International application number: PCT/KR2023/021839
(87) International publication number: WO 2025/143315

(57) **Abstract**

The present disclosure relates to a light source assembly and an image projection apparatus including the same. A light source assembly according to one embodiment of the present disclosure comprises a first light source array including a plurality of first light sources outputting light of a first color; a second light source array including a plurality of second light sources outputting light of a second color and a plurality of third light sources outputting light of a third color; a first dichroic mirror arranged to correspond to the first light source array; a second dichroic mirror arranged to correspond to the second light source array; and a plurality of reflection mirrors reflecting light transmitted through the second dichroic mirror, wherein the first dichroic mirror, when reflecting the light of the first color, transmits the light of the second color and the light of the third color, and when transmitting the light of the first color, reflects the light of the second color and the light of the third color, and the second dichroic mirror reflects the light of the second color and transmits the light of the third color.

## Description

### [Technical Field]

The present disclosure relates to a light source assembly and an image projection apparatus including the same, and more particularly, to a light source assembly including a plurality of laser diodes outputting light of different colors and an image projection apparatus including the same.

### [Background Art]

Recently, increasing consumption of high-quality and large-capacity multimedia content has created demand for enlargement of screens and improvement of image quality. Among display devices, an image projection apparatus is a device that projects an image to the outside using an optical device and has an advantage of easily implementing a large screen compared to other types of display devices.

Such an image projection apparatus synthesizes light emitted from a light source and an image according to an image signal, adjusts the synthesized result at a predetermined ratio, and projects the adjusted result to the outside. Recently, attempts have been made to use a light emitting diode, a laser diode, or an organic light emitting diode as a light source included in an image projection apparatus. In particular, since a laser diode provides light having a single wavelength, efficiency is excellent and luminance may be improved, thereby facilitating research on an image projection apparatus using a laser diode as a light source.

Meanwhile, recently, various efforts toward miniaturization and integration of display devices have been made along with efforts to improve performance thereof. In the case of a prior document (Korean Patent Laid-open Publication No. 10-2016-0061373), light sources corresponding to red, green, and blue are used respectively for three panels to secure high luminance performance, but there is a problem in that a configuration of the corresponding optical device becomes complicated and a size thereof increases.

### [Disclosure]

### [Technical Problem]

The present disclosure aims to solve the aforementioned problems and other problems.

Another object is to provide a light source assembly capable of simplifying a configuration of an optical device while securing high luminance performance and an image projection apparatus including the same.

Another object is to provide a light source assembly capable of securing brightness and uniformity performance of light output from the light source assembly and an image projection apparatus including the same.

Another object is to provide a light source assembly capable of minimizing a size of an optical device and an image projection apparatus including the same.

### [Technical Solution]

To achieve the objects above, a light source array according to one embodiment of the present disclosure comprises a first light source array including a plurality of first light sources outputting light of a first color; a second light source array including a plurality of second light sources outputting light of a second color and a plurality of third light sources outputting light of a third color; a first dichroic mirror arranged to correspond to the first light source array; a second dichroic mirror arranged to correspond to the second light source array; and a plurality of reflection mirrors 551 and 553 reflecting light transmitted through the second dichroic mirror, wherein, when reflecting the light of the first color, the first dichroic mirror transmits the light of the second color and the light of the third color, and when transmitting the light of the first color, reflects the light of the second color and the light of the third color; and the second dichroic mirror reflects the light of the second color and transmits the light of the third color.

To achieve the objects above, an image projection apparatus according to one embodiment of the present disclosure comprises a light source assembly including a plurality of light sources, wherein the light source assembly comprises a first light source array including a plurality of first light sources outputting light of a first color; a second light source array including a plurality of second light sources outputting light of a second color and a plurality of third light sources outputting light of a third color; a first dichroic mirror arranged to correspond to the first light source array; a second dichroic mirror arranged to correspond to the second light source array; and a plurality of reflection mirrors 551 and 553 reflecting light transmitted through the second dichroic mirror, wherein, when reflecting the light of the first color, the first dichroic mirror transmits the light of the second color and the light of the third color, and when transmitting the light of the first color, reflects the light of the second color and the light of the third color; and the second dichroic mirror reflects the light of the second color and transmits the light of the third color.

### [Advantageous Effects]

Effects of the light source assembly and the image projection apparatus including the same according to the present disclosure will be described as follows.

According to at least one embodiment of the present disclosure, it is possible to simplify a configuration of an optical device while securing high luminance performance.

According to at least one embodiment of the present disclosure, it is possible to secure brightness and uniformity performance of light output from a light source assembly.

According to at least one embodiment of the present disclosure, it is possible to minimize a size of an optical device.

Additional scope of applicability of the present disclosure will become apparent from the detailed description hereinafter. However, since various changes and modifications within the spirit and scope of the present disclosure may be clearly understood by those skilled in the art, the detailed description and specific embodiments, such as preferred embodiments of the present disclosure should be understood as being given only as examples.

### [Description of Drawings]

FIG. 1 is a diagram illustrating an image system according to one embodiment of the present disclosure.
FIG. 2 is an internal block diagram of the image projection apparatus of FIG. 1.
FIG. 3 is an internal block diagram of the signal processing device of FIG. 2.
FIG. 4 illustrates an example of a structure of an optical device of an image projection apparatus according to one embodiment of the present disclosure.
FIGS. 5 and 6 are diagrams referred to in description of a configuration of a light source assembly according to one embodiment of the present disclosure.
FIG. 7 is a diagram referred to in description of a configuration of a light source assembly according to another embodiment of the present disclosure.
FIGS. 8 and 9 are diagrams referred to in description of uniformity of light output from a light source assembly according to embodiments of the present disclosure.

### [Mode for Invention]

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first, second, etc. may be used to describe various elements, but these elements are not limited by these terms. These terms are used only to distinguish one element from another.

Hereinafter, an optical device may refer to a device outputting visible light. Such an optical device may be applied to an image projection apparatus. Alternatively, the optical device may also be applied to a lighting device.

Hereinafter, an image projection apparatus may be referred to as a projector. Meanwhile, the image projection apparatus described in the present disclosure may also be mounted as one component within another device. For example, the image projection apparatus may be mounted in a mobile terminal, may be included in a home appliance such as an air conditioner, a refrigerator, a cooking appliance, or a robot cleaner, or may be mounted in a vehicle such as an automobile.

Hereinafter, direction is defined based on a rectangular coordinate system. In the rectangular coordinate system, the x-axis direction may be defined as a left-right direction. At this time, based on the origin, the direction toward +x may mean a right direction, and the direction toward -x may mean a left direction. In addition, the y-axis direction may be defined as a front-rear direction. At this time, based on the origin, the direction toward +y may mean a forward direction, and the direction toward -y may mean a rearward direction. In addition, the z-axis direction may be defined as an up-down direction. At this time, based on the origin, the direction toward +z may mean an upward direction, and the direction toward -z may mean a downward direction.

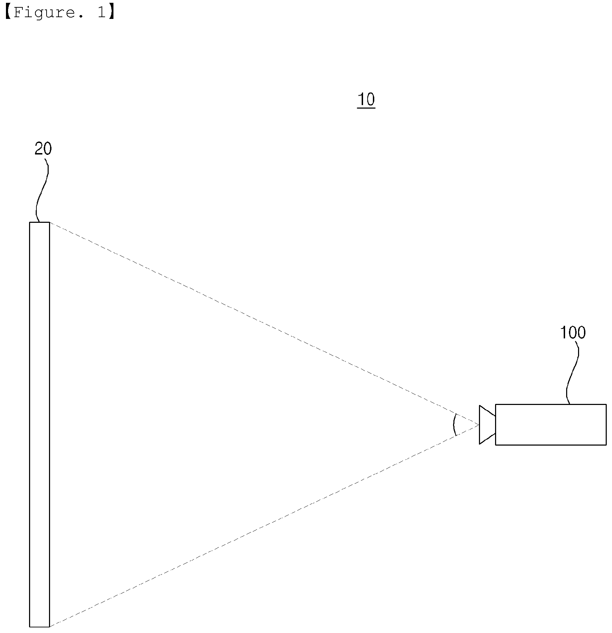

FIG. 1 is a diagram illustrating an image system according to one embodiment of the present disclosure.

Referring to FIG. 1, an image system 10 may include an image projection apparatus 100. The image projection apparatus 100 may project an image onto a real-world background 20. Hereinafter, an image projected by the image projection apparatus 100 may be referred to as a projected image. In FIG. 1, the real-world background 20 is illustrated as a screen having a flat surface, but the present disclosure is not limited thereto. A user may view a projected image projected onto the real-world background 20.

The image system 10 may include a remote controller (not shown). The remote controller may be communicatively connected to the image projection apparatus 100 and may provide various control signals to the image projection apparatus 100. At this time, the remote controller may establish a communication network with the image projection apparatus 100 and may include a device for transmitting various control signals to the image projection apparatus 100 through the established communication network or receiving, from the image projection apparatus 100, signals related to various operations processed by the image projection apparatus 100. In the present disclosure, the remote controller is described as an example of a spatial remote controller, but the present disclosure is not limited thereto.

The image projection apparatus 100 may be connected to only one remote controller or simultaneously connected to two or more remote controllers 200 and may change a projected image or adjust a state of the projected image based on control signals provided from the respective remote controllers 200.

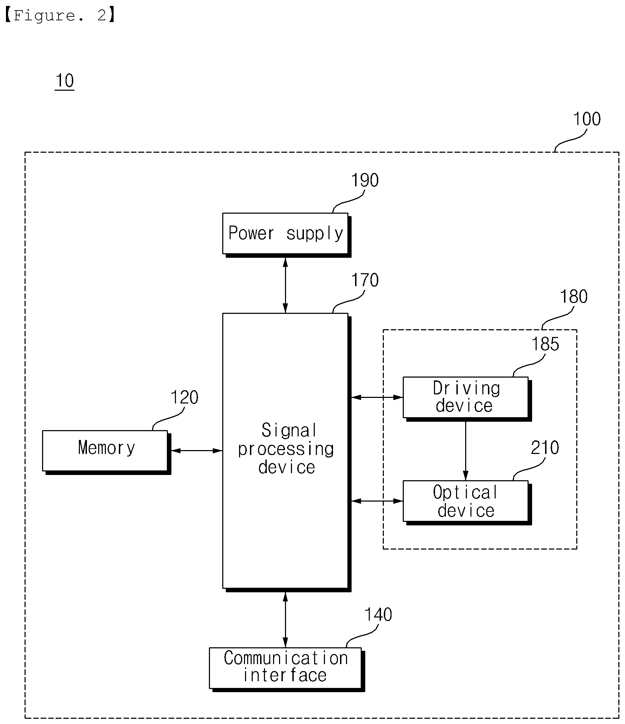

FIG. 2 is an internal block diagram of the image projection apparatus of FIG. 1.

Referring to FIG. 2, the image projection apparatus 100 may include a memory 120, a camera 130, a communication interface 140, a signal processing device 170, an image output device 180, and/or a power supply 190.

The memory 120 may store a program for processing and controlling each signal in the signal processing device 170 or may store a signal-processed image or data signal. For example, the memory 120 may store application programs designed for performing various tasks that can be processed by the signal processing device 170, and may provide some of the stored application programs selectively when requested by the signal processing device 170.

Program, or the like stored in the memory 120 is not particularly limited as long as they can be executed by the signal processing device 170.

FIG. 2 illustrates an embodiment in which the memory 120 is provided separately from the signal processing device 170, but the scope of the present disclosure is not limited thereto, and the memory 120 may be included in the signal processing device 170.

The memory 120 may include at least one of volatile memory (e.g. DRAM, SRAM, SDRAM, etc.), and nonvolatile memory (e.g. flash memory, hard disk drive HDD, and solid-state drive SSD, etc.). In various embodiments of the present disclosure, the memory 120 and a memory may be used interchangeably.

The communication interface 140 may serve as an interface with all external devices or networks connected to the image projection apparatus 100 in a wired or wireless manner. The communication interface 140 may receive data or power from an external device and transmit the data or power to the respective constituting elements within the image projection apparatus 100 and may allow data within the image projection apparatus 100 to be transmitted to the external device.

The communication interface 140 may receive a radio signal from a mobile terminal (not shown). Here, the radio signal may include various forms of data such as a voice call signal, a video call signal, text data, or image data. Meanwhile, the communication interface 140 may receive a control signal from the remote controller.

The communication interface 140 may include a short-range communication device (not shown). As a short-range communication technology, Bluetooth, Radio Frequency Identification (RFID), infrared Data Association (IrDA), Ultra-Wideband (UWB), ZigBee, Near Field Communication (NFC), and the like may be used.

The signal processing device 170 may include at least one processor. Here, the processor may be a general processor such as a central processing unit (CPU). Obviously, the processor may be a dedicated device such as an ASIC or another hardware-based processor.

The signal processing device 170 may control an overall operation of the image projection apparatus 100. The signal processing device 170 may control operations of respective units within the image projection apparatus 100. The signal processing device 170 may be referred to as a controller 170.

The signal processing device 170 may control a video image stored in the memory 120 or a video image received from the outside through the communication interface 140 to be output to the outside as a projected image.

The signal processing device 170 may control the image output device 180. The image output device 180 may include a driving device 185 and/or an optical device 210. The signal processing device 170 may control the optical device 210 or the driving device 185 that outputs visible light such as R, G, and B light. For example, the signal processing device 170 may output R, G, and B signals corresponding to a video image to the optical device 210 or the driving device 185.

The driving device 185 may drive the optical device 210. For example, the driving device 185 may drive a light source within the optical device 210.

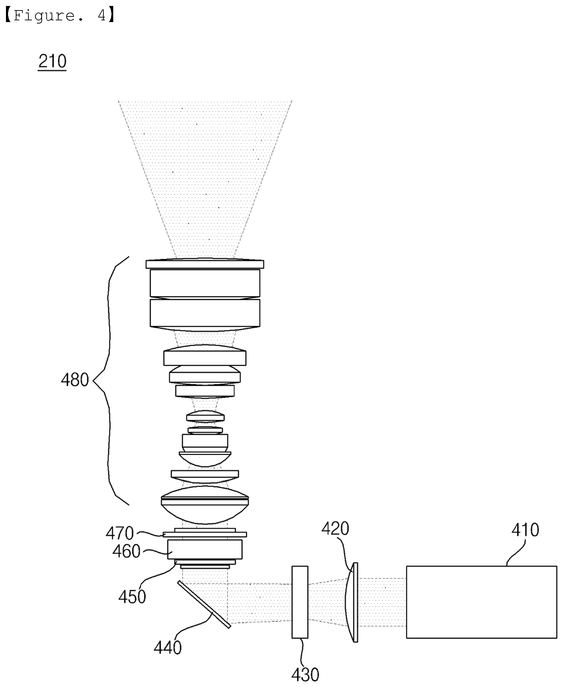

The optical device 210 may include optical components such as a light source and a lens for light output, particularly visible light output. In particular, the optical device 210 according to an embodiment of the present disclosure may simply implement color separation and color synthesis of light. This will be described below with reference to FIG. 4 and subsequent drawings.

The power supply 190 may receive external power or internal power under control of the signal processing device 170 and may supply power required for operation of respective components.

The power supply 190 may supply power throughout the image projection apparatus 100. Particularly, the power supply 190 may supply power to the signal processing device 170 implemented in the form of a system on chip (SOC), the image output device 180 for image display, the audio output device (not shown) for audio output, and the like.

Meanwhile, although not shown in FIG. 2, the image projection apparatus 100 may include an input unit. The input unit may be provided on one side of a main body of the image projection apparatus 100. For example, the input unit may include a touch pad, a physical button, and the like.

The input unit may receive various user commands related to the operation of the image projection apparatus 100 and may transmit, to the signal processing device 170, a control signal corresponding to an input command.

Meanwhile, the block diagram of the image projection apparatus 100 shown in FIG. 2 is only a block diagram for an embodiment of the present disclosure, and each component of the block diagram may be combined, added, or omitted according to the specifications of the image projection apparatus 100 that is actually implemented.

That is, as needed, two or more components may be combined into one component, or one component may be subdivided into two or more components. In addition, the functions performed by each block are for describing embodiments of the present disclosure, and the specific operations or devices do not limit the scope of the present disclosure.

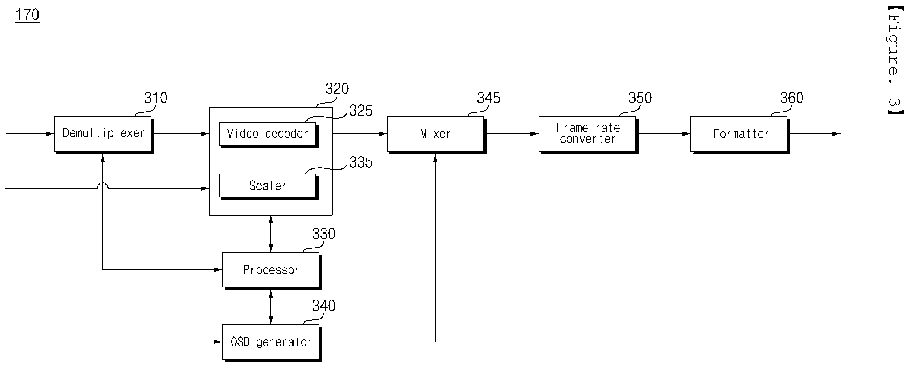

FIG. 3 is an internal block diagram of the controller of FIG. 2.

Referring to FIG. 3, the signal processing device 170 according to an embodiment of the present disclosure may include a demultiplexer 310, an image processor 320, a processor 330, an OSD generator 340, a mixer 345, a frame rate converter 350, and/or a formatter 360. Besides, the signal processing device 170 may further include an audio processor (not shown) and a data processor (not shown).

The demultiplexer 310 demultiplexes the input stream

The image processor 320 may perform image processing on the demultiplexed video signal. To this end, the image processor 320 may include a video decoder 325 and a scaler 335.

The video decoder 325 decodes the demultiplexed video signal, and the scaler 335 performs scaling so that the resolution of the decoded video signal may be output to the display 180.

The video decoder 325 may include a decoder of various standards.

The processor 330 may control the overall operation of the image projection apparatus 100 or the signal processing device 170. In addition, the processor 330 may control operations of the demultiplexer 310, the image processor 320, the OSD generator 340, and the like in the signal processing device 170.

The OSD generator 340 generates an OSD signal according to a user input or by itself. The OSD generator 340 may generate a pointer based on a pointing signal input from the remote controller. The OSD generator 340 may include a pointing signal processing unit (not shown) for generating a pointer. The pointing signal processing unit (not shown) may be provided separately, rather than being provided in the OSD generator 240.

The mixer 345 may mix an OSD signal generated by the OSD generator 340 with a decoded image signal image-processed by the image processor 320. The mixed image signal may be supplied to the frame rate converter 350.

The frame rate converter (FRC) 350 may convert the frame rate of an input image. Meanwhile, the frame rate converter 350 may also directly output the frame rate without additional frame rate conversion.

Meanwhile, the formatter 360 may receive the signal mixed by the mixer 345, i.e., the OSD signal and the decoded image signal, and may perform signal conversion for input to the image output device 180. For example, the formatter 360 may output a low-voltage differential signal (LVDS).

Meanwhile, the block diagram of the signal processing device 170 shown in FIG. 3 is just a block diagram for an embodiment of the present disclosure. Each component of the block diagram may be integrated, added, or omitted according to the specifications of the actually implemented signal processing device 170.

In particular, the frame rate converter 350 and the formatter 360 are not provided in the signal processing device 170, but may be separately provided respectively or may be provided separately as a single module.

FIG. 4 illustrates an example of a structure of an optical device of an image projection apparatus according to one embodiment of the present disclosure.

Referring to FIG. 4, the optical device 210 may include a light source assembly 410 outputting light, a condenser lens 420, a diffuser 430 diffusing light passing through the condenser lens 420, a reflection mirror 440, a display element 450, a Total Internal Reflection (TIR) prism 460, an actuator 470, and/or an optical lens 480.

The light source assembly 410 may include at least one light source. For example, the light source assembly 410 may include a plurality of laser diodes respectively outputting red light, blue light, and green light. The light source assembly 410 may include at least one dichroic filter reflecting part of incident light and transmitting another part thereof. The dichroic filter may be referred to as a dichroic mirror. At this time, as light output from the light source included in the light source assembly 410 is transmitted or reflected through the dichroic filter, color separation and color synthesis of light may be performed.

The condenser lens 420 may change a path of light output from the light source assembly 410. Light paths of a plurality of colors output from the light source assembly 410 and passing through the condenser lens 420 may be directed toward a focal point of the condenser lens 420.

The reflection mirror 440 may reflect light passing through the diffuser 430 in a direction toward the display element 450.

The display element 450 may output a projected image based on light reflected by the reflection mirror 440. According to one embodiment, the display element 450 may include a digital micro-mirror device (DMD). The digital micro-mirror device may be constructed by arranging a plurality of tiny mirrors. At this time, each of the plurality of mirrors may serve as a pixel and may selectively reflect light reflected by the reflection mirror 440 to implement a projected image. As light loss is minimized by operation of the micro-mirrors, light efficiency is improved and color reproducibility is enhanced, thereby enabling output of a 4K projected image or an 8K projected image. Meanwhile, in the present disclosure, the display element 450 is described as an example of a digital micro-mirror device, but the present disclosure is not limited thereto. For example, the display element 450 may include a transmissive display panel such as a liquid crystal display panel.

The optical lens 480 may include a projection lens. The optical lens may adjust a size of a projected image.

Meanwhile, although not shown in the drawing, the optical device 210 may further include a collimator lens, a fly-eye lens, and an illumination lens. Accordingly, the structure of the optical device 210 may be simplified while securing high luminance performance.

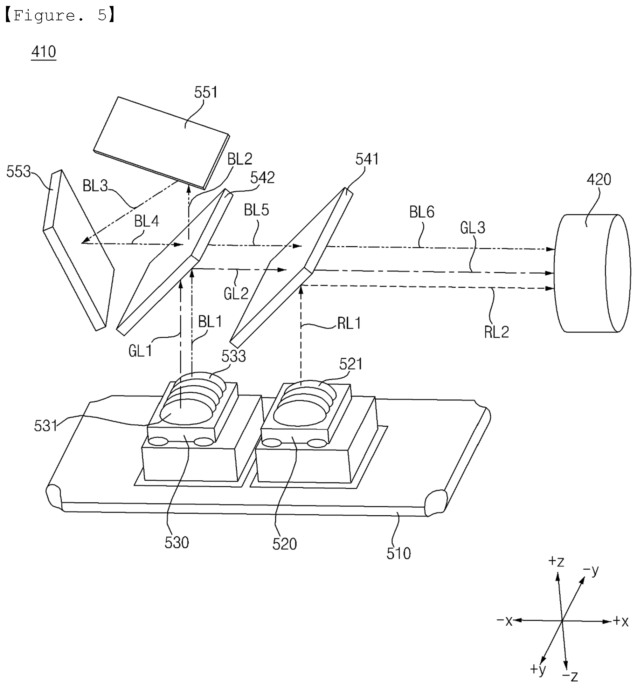

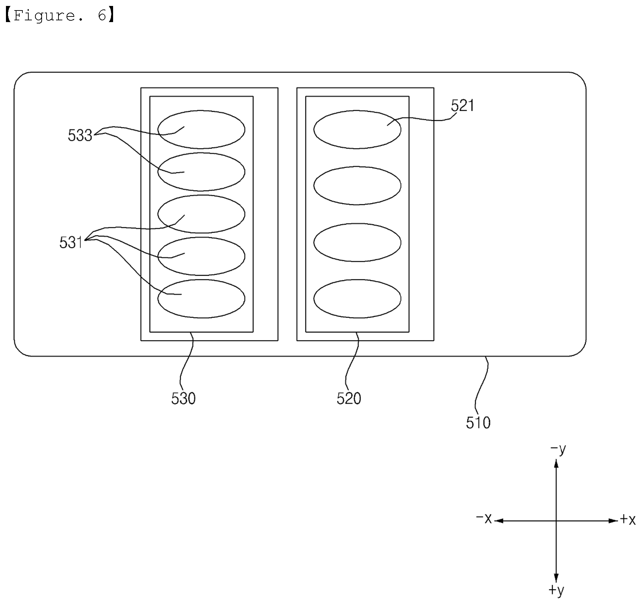

FIGS. 5 and 6 are diagrams referred to in description of a configuration of a light source assembly according to one embodiment of the present disclosure.

Referring to FIGS. 5 and 6, the light source assembly 410 may include a substrate 510, a first light source array 520, a second light source array 530, a first dichroic mirror 541, a second dichroic mirror 542, a first reflection mirror 551, and/or a second reflection mirror 553.

The first light source array 520 and the second light source array 530 may be disposed on the substrate 510. The first light source array 520 and the second light source array 530 may be mounted on one surface of the substrate 510. The first light source array 520 and the second light source array 530 may be disposed to be spaced apart from each other along an x-axis direction. The first light source array 520 and the second light source array 530 may be disposed side by side along the x-axis direction.

The first light source array 520 may include a plurality of first light sources 521. The plurality of first light sources 521 may be arranged along a y-axis direction. The plurality of first light sources 521 may emit light of a first color in the upward direction.

The second light source array 530 may include a plurality of second light sources 531 and a plurality of third light sources 533. The plurality of second light sources 531 may be disposed on one side of the second light source array 530, and the plurality of third light sources 533 may be disposed on another side of the second light source array 530. The plurality of second light sources 531 and the plurality of third light sources 533 may be arranged along the y-axis direction. The plurality of second light sources 531 may emit light of a second color in the upward direction. The plurality of third light sources 533 may emit light of a third color in the upward direction.

In other words, when the first light source array 520 and the second light source array 530 are arranged on one substrate 510, a size of the optical device 210 may be reduced compared to a case in which the first light source 521, the second light source 531, and the third light source 533 are respectively disposed on separate substrates. In addition, as the second light source 531 and the third light source 533 are together disposed in the second light source array 530, the size of the optical device 210 may be further reduced compared to a case in which the first light source 521, the second light source 531, and the third light source 533 respectively constitute light source arrays and are arranged on one substrate 510.

The first dichroic mirror 541 may be disposed above the first light source array 520. The first dichroic mirror 541 may reflect light of the first color. Light RL1 of the first color emitted from the first light source 521 in the upward direction may be reflected by the first dichroic mirror 541 and directed in the rightward direction. Light RL2 of the first color reflected by the first dichroic mirror 541 may be incident on the condenser lens 420 in the rightward direction.

The first dichroic mirror 541 may transmit light of the second color and light of the third color. A traveling direction of light transmitted through the first dichroic mirror 541 may be maintained.

The second dichroic mirror 542 may be disposed above the second light source array 530. The second dichroic mirror 542 may reflect light of the second color. Light GL1 of the second color emitted from the second light source 531 in the upward direction may be reflected by the second dichroic mirror 542 and may be directed in the rightward direction. Light RL2 of the second color reflected by the second dichroic mirror 542 and directed in the rightward direction may be incident on the first dichroic mirror 541. Light GL3 of the second color transmitted through the first dichroic mirror 541 may be incident on the condenser lens 420 in the rightward direction.

The first dichroic mirror 541 and the second dichroic mirror 542 may be disposed parallel to each other.

The second dichroic mirror 542 may transmit light of the third color. A traveling direction of light transmitted through the second dichroic mirror 542 may be maintained.

Light BL1 of the third color emitted from the third light source 533 in the upward direction may be incident on the second dichroic mirror 542. Light BL2 of the third color transmitted through the second dichroic mirror 542 may be directed in the upward direction. Light BL2 of the third color transmitted through the second dichroic mirror 542 may be reflected by the first reflection mirror 551. Light BL3 of the third color reflected by the first reflection mirror 551 may be directed toward the second reflection mirror 553. Light BL3 of the third color incident on the second reflection mirror 553 may be reflected by the second reflection mirror 553. Light BL4 of the third color reflected by the second reflection mirror 553 may be directed in a predetermined direction at least corresponding to the rightward direction. The predetermined direction may be a direction toward the light GL3 of the second color transmitted through the first dichroic mirror 541. Light BL4 of the third color reflected by the second reflection mirror 553 may be incident on the second dichroic mirror 542. Light BL5 of the third color transmitted through the second dichroic mirror 542 may be incident on the first dichroic mirror 541 in the predetermined direction. Light BL6 of the third color transmitted through the first dichroic mirror 541 may be incident on the condenser lens 420 in the predetermined direction. In other words, a direction in which the light GL3 of the second color transmitted through the first dichroic mirror 541 is directed and a direction in which the light BL6 of the third color is directed may intersect each other.

According to one embodiment, the number of the first light sources 521 may be greater than the number of the second light sources 531. The number of the second light sources 531 may be greater than the number of the third light sources 533.

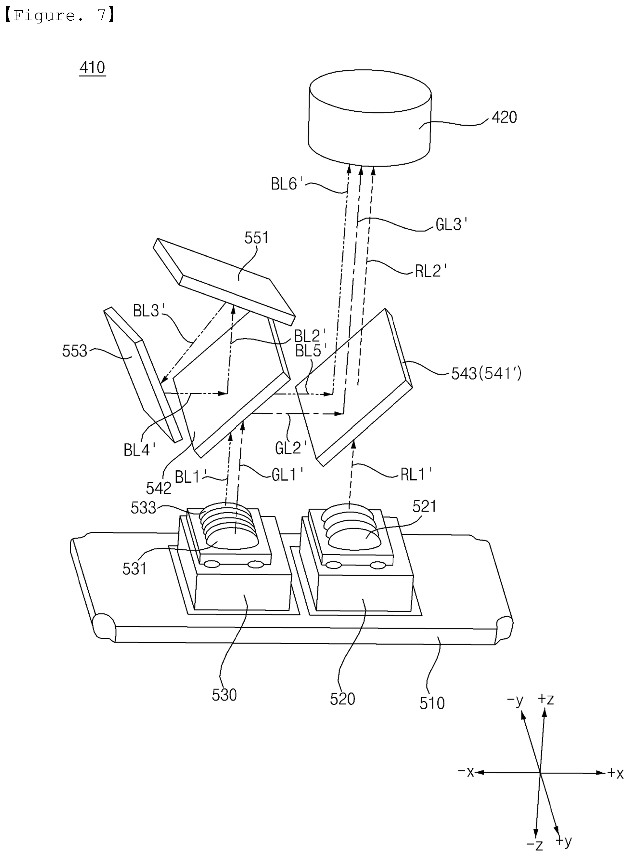

FIG. 7 is a diagram referred to in description of a configuration of a light source assembly according to another embodiment of the present disclosure. Detailed descriptions of contents overlapping those described with reference to FIGS. 5 and 6 will be omitted.

Referring to FIG. 7, the first dichroic mirror 541' may transmit light of the first color. In FIG. 7, the first dichroic mirror 541' will be referred to as a third dichroic mirror 543 to distinguish the first dichroic mirror 541' from the first dichroic mirror 541 of FIG. 5.

A traveling direction of light transmitted through the third dichroic mirror 543 may be maintained. Light RL1' of the first color emitted from the first light source 521 in the upward direction may be incident on the third dichroic mirror 543. Light RL2' of the first color transmitted through the third dichroic mirror 543 may be incident on the condenser lens 420 in the upward direction.

The third dichroic mirror 543 may reflect light of the second color and light of the third color. The second dichroic mirror 542 and the third dichroic mirror 543 may be disposed parallel to each other.

Light GL1' of the second color emitted from the second light source 531 in the upward direction may be reflected by the second dichroic mirror 542 and may be directed in the rightward direction. Light RL2' of the second color reflected by the second dichroic mirror 542 and directed in the rightward direction may be reflected by the third dichroic mirror 543 and may be directed in the upward direction. Light GL3' of the second color reflected by the third dichroic mirror 543 may be incident on the condenser lens 420 in the upward direction.

Light BL1' of the third color emitted from the third light source 533 in the upward direction may be incident on the second dichroic mirror 542. Light BL2' of the third color transmitted through the second dichroic mirror 542 may be directed in the upward direction. Light BL2' of the third color transmitted through the second dichroic mirror 542 may be reflected by the first reflection mirror 551. Light BL3' of the third color reflected by the first reflection mirror 551 may be directed toward the second reflection mirror 553. Light BL3' of the third color incident on the second reflection mirror 553 may be reflected by the second reflection mirror 553. Light BL4' of the third color reflected by the second reflection mirror 553 may be directed in a first direction at least corresponding to the rightward direction. Light BL4' of the third color reflected by the second reflection mirror 553 may be incident on the second dichroic mirror 542. Light BL5' of the third color transmitted through the second dichroic mirror 542 may be incident on the third dichroic mirror 543 in the first direction. Light BL5' of the third color incident on the third dichroic mirror 543 in the first direction may be reflected by the third dichroic mirror 543 and may be directed toward a second direction at least corresponding to the upward direction. The second direction may be a direction toward the light GL3' of the second color reflected by the third dichroic mirror 543. Light BL6' of the third color reflected by the third dichroic mirror 543 may be incident on the condenser lens 420 in the second direction. In other words, a direction in which the light GL3' of the second color reflected by the third dichroic mirror 543 is directed and a direction in which the light BL6' of the third color is directed may intersect each other.

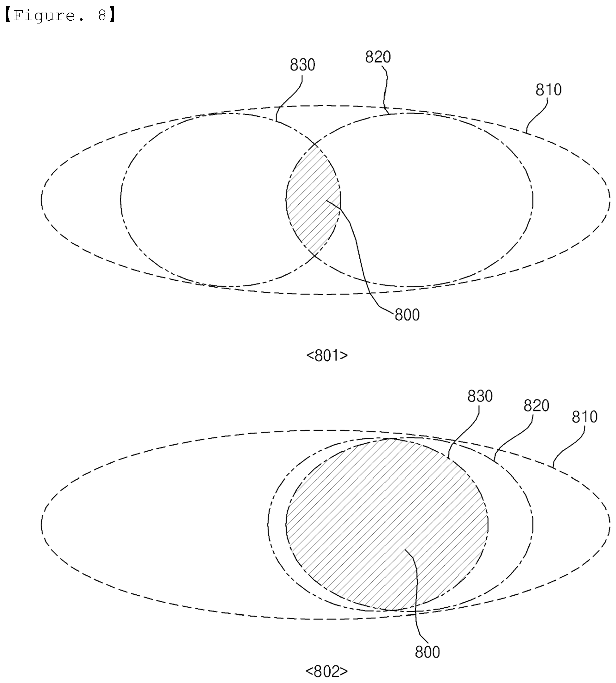

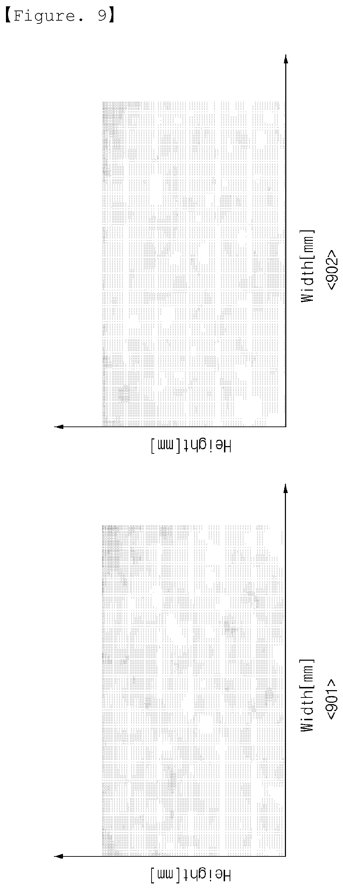

FIGS. 8 and 9 are diagrams referred to in description of uniformity of light output from a light source assembly according to embodiments of the present disclosure.

Referring to FIG. 8, a first region 810 corresponding to first light incident on the condenser lens 420 may overlap at least part of a second region 810 corresponding to second light incident on the condenser lens 420. Also, a region in which the first region 810 and the second region 820 overlap may overlap at least part of a third region 830 corresponding to third light incident on the condenser lens 420. Here, a region 800 in which the first region 810, the second region 820, and the third region 830 all overlap may be referred to as a white region 800.

When the second dichroic mirror 542 reflects both the light of the second color and the light of the third color, the second region 820 and the third region 830 may be distributed in correspondence to arrangement of the second light sources 531 and the third light sources 533 in the second light source array 530. At this time, as indicated by the drawing number 801, the size of the white region 800 may be relatively small.

Meanwhile, according to various embodiments of the present disclosure, when the second dichroic mirror 542 transmits the light of the third color and the first reflection mirror 551 and the second reflection mirror 553 reflect the light of the third color, a traveling direction of the light of the third color may be guided toward a traveling direction of the light of the second color regardless of arrangement of the second light sources 531 and the third light sources 533 in the second light source array 530. Accordingly, as indicated by the drawing number 802, the size of the white region 800 may be relatively large.

Referring to FIG. 9, when the size of the white region 800 is relatively small 901, white uniformity may be relatively low at a first value (e.g., 90.1%). Meanwhile, when the size of the white region 800 is relatively large 902, the white uniformity may be relatively high at a second value (e.g., 95.7%). Here, the white uniformity may refer to a degree to which white color is uniformly displayed across an entire screen.

Also, when the size of the white region 800 is relatively small 901, color uniformity may be relatively high at a third value (e.g., 0.020). Meanwhile, when the size of the white region 800 is relatively large 902, the color uniformity may be relatively low at a fourth value (e.g., 0.012). Here, the color uniformity may refer to a difference between chromaticity at a predetermined point on a screen and chromaticity at the screen center.

Accordingly, when the size of the white region 800 increases according to a configuration of the light source assembly 410 according to various embodiments of the present disclosure, uniformity of light may be improved.

As described above, according to at least one embodiment of the present disclosure, it is possible to simplify a configuration of the optical device 210 while securing high luminance performance.

Also, according to at least one embodiment of the present disclosure, it is possible to secure brightness and uniformity performance of light output from the light source assembly 410.

According to at least one embodiment of the present disclosure, it is possible to minimize a size of the optical device 210.

Referring to FIGS. 1 to 9, a light source assembly 410 according to one aspect of the present disclosure comprises a first light source array 520 including a plurality of first light sources 521 outputting light of a first color; a second light source array 530 including a plurality of second light sources 531 outputting light of a second color and a plurality of third light sources 533 outputting light of a third color; a first dichroic mirror 541 and 541' arranged to correspond to the first light source array 520; a second dichroic mirror 542 arranged to correspond to the second light source array 530; and a plurality of reflection mirrors 551 and 553 reflecting light transmitted through the second dichroic mirror 542, wherein, when reflecting the light of the first color, the first dichroic mirror 541 and 541' transmits the light of the second color and the light of the third color, and when transmitting the light of the first color, reflects the light of the second color and the light of the third color; and the second dichroic mirror 542 reflects the light of the second color and transmits the light of the third color.

Also, according to one aspect of the present disclosure, the light of the second color output from the plurality of second light sources 531 and reflected by the second dichroic mirror 542 may be incident on the first dichroic mirror 541 and 541'; the light of the third color output from the plurality of third light sources 533 and transmitted through the second dichroic mirror 542 may be reflected by the plurality of reflection mirrors 551 and 553 and then transmitted through the second dichroic mirror 542 again to be incident on the first dichroic mirror 541 and 541'; and a direction in which the light of the second color is incident on the first dichroic mirror 541 and 541' may be different from a direction in which the light of the third color is incident on the first dichroic mirror 541 and 541'.

Also, according to one aspect of the present disclosure, when the first dichroic mirror 541 reflects the light of the first color, a direction in which the light of the second color transmitted through the first dichroic mirror 541 is directed and a direction in which the light of the third color is directed may intersect each other, and when the first dichroic mirror 541' transmits the light of the first color, a direction in which the light of the second color reflected by the first dichroic mirror 541' is directed and a direction in which the light of the third color is directed may intersect each other.

Also, according to one aspect of the present disclosure, the first dichroic mirror 541 and 541' and the second dichroic mirror 542 may be disposed parallel to each other.

Also, according to one aspect of the present disclosure, the first light source array 520 and the second light source array 530 may be mounted on one surface of a substrate.

Also, according to one aspect of the present disclosure, the first light source array 520 and the second light source array 530 may be disposed side by side in a first direction, the plurality of second light sources 531 may be disposed on one side of the second light source array 530 in a second direction, and the plurality of third light sources 533 may be disposed on another side of the second light source array 530 in the second direction.

Also, according to one aspect of the present disclosure, the first direction and the second direction may be perpendicular to each other.

Also, according to one aspect of the present disclosure, the first light sources 521, the second light sources 531, and the third light sources 533 may emit light in a third direction perpendicular to the first direction and the second direction.

Also, according to one aspect of the present disclosure, the plurality of reflection mirrors 551 and 553 may include a first reflection mirror 551 reflecting the light of the third color output from the plurality of third light sources 533 and transmitted through the second dichroic mirror 542; and a second reflection mirror 553 reflecting the light of the third color reflected by the first reflection mirror 551 toward the second dichroic mirror 542.

The accompanying drawings of the present disclosure aim to facilitate understanding of the present disclosure and should not be construed as limited to the accompanying drawings. Also, the present disclosure is not limited to a specific disclosed form, but includes all modifications, equivalents, and substitutions without departing from the scope and idea of the present disclosure.

The operating method according to embodiments of the present disclosure may be implemented as codes that may be read by a processor in a recording medium that may be read by the processor. The processor-readable recording medium may include any type of recording devices in which data that may be read by the processor is stored. Examples of the processor-readable recording medium include ROM, RAM, CD-ROM, a magnetic tape, a floppy disc, optical data storage devices, and the like. In addition, the processor-readable recording medium also includes implementations in the form of carrier waves, e.g., transmission via the Internet. The processor-readable recording medium may be distributed over network-connected computer systems so that processor-readable codes may be stored and executed in a distributed fashion.

Specific embodiments have been described. However, the present disclosure is not limited to the specific embodiments and various modifications may be made without departing from the scope of the present disclosure claimed in the claims, and such modifications should not be individually understood from technical concepts or prospects of the present disclosure.

## Claims

1. A light source assembly comprising:
a first light source array including a plurality of first light sources outputting light of a first color;
a second light source array including a plurality of second light sources outputting light of a second color and a plurality of third light sources outputting light of a third color;
a first dichroic mirror arranged to correspond to the first light source array;
a second dichroic mirror arranged to correspond to the second light source array; and
a plurality of reflection mirrors reflecting light transmitted through the second dichroic mirror,
wherein the first dichroic mirror, when reflecting the light of the first color, transmits the light of the second color and the light of the third color, and
when transmitting the light of the first color, reflects the light of the second color and the light of the third color, and
the second dichroic mirror reflects the light of the second color and transmits the light of the third color.

2. The light source assembly of claim 1, wherein the light of the second color output from the plurality of second light sources and reflected by the second dichroic mirror is incident on the first dichroic mirror,
the light of the third color output from the plurality of third light sources and transmitted through the second dichroic mirror is reflected by the plurality of reflection mirrors and then transmitted through the second dichroic mirror again to be incident on the first dichroic mirror, and
a direction in which the light of the second color is incident on the first dichroic mirror is different from a direction in which the light of the third color is incident on the first dichroic mirror.

3. The light source assembly of claim 2, wherein, when the first dichroic mirror reflects the light of the first color, a direction in which the light of the second color transmitted through the first dichroic mirror is directed and a direction in which the light of the third color is directed intersect each other, and
when the first dichroic mirror transmits the light of the first color, a direction in which the light of the second color reflected by the first dichroic mirror is directed and a direction in which the light of the third color is directed intersect each other.

4. The light source assembly of claim 2, wherein the first dichroic mirror and the second dichroic mirror are disposed parallel to each other.

5. The light source assembly of claim 1, wherein the first light source array and the second light source array are mounted on one surface of a substrate.

6. The light source assembly of claim 5, wherein the first light source array and the second light source array are disposed side by side in a first direction,
the plurality of second light sources are disposed on one side of the second light source array in a second direction, and
the plurality of third light sources are disposed on another side of the second light source array in the second direction.

7. The light source assembly of claim 6, wherein the first direction and the second direction are perpendicular to each other.

8. The light source assembly of claim 7, wherein the first light sources, the second light sources, and the third light sources emit light in a third direction perpendicular to the first direction and the second direction.

9. The light source assembly of claim 1, wherein the plurality of reflection mirrors include:
a first reflection mirror reflecting the light of the third color output from the plurality of third light sources and transmitted through the second dichroic mirror; and
a second reflection mirror reflecting the light of the third color reflected by the first reflection mirror toward the second dichroic mirror.

10. An image projection apparatus comprising the light source assembly according to any one of claims 1 to 9.
